# EUROPEAN PATENT APPLICATION

(11) **EP 2 886 579 A1**
(43) Date of publication of application: **24.06.2015**
(21) Application number: 13829195.0
(22) Date of filing: 10.05.2013
(51) Int. Cl.: C08G 63/78, C08G 63/12, C08L 67/02

(54) **METHOD FOR PREPARING BIODEGRADABLE ALIPHATIC-AROMATIC POLYESTER COPOLYMER RESIN WITH IMPROVED HYDROLYSIS RESISTANCE**

(30) Priority: 17.08.2012 KR 20120090172
(71) Applicant: Samsung Fine Chemicals Co., Ltd., Ulsan 680-090 (KR)
(72) Inventor: CHUN, Jong Pil, Daejeon 302-728 (KR); KIM, Hee Soo, Yongin-si Gyeonggi-do 448-150 (KR); KIM, Ye Jin, Seoul 130-100 (KR); CHOI, Soo Youn, Jeonju-si Jeollabuk-do 560-896 (KR); YUN, Ki Chull, Cheonan-si Chungcheongnam-do 330-260 (KR); KIM, Min Kyoung, Seoul 158-755 (KR); YEOM, Nam Yeong, Suwon-si Gyeonggi-do 440-320 (KR); KANG, Sang Mi, Daejeon 302-831 (KR)
(74) Representative: Kador & Partner
(86) International application number: PCT/KR2013/004160
(87) International publication number: WO 2014/027736

(57) **Abstract**

There is provided a method of preparation for a biodegradable co-polyester resin with improved hydrolysis resistance, the method including performing a primary esterification reaction between an aliphatic dihydroxy compound and an aliphatic dicarboxylic acid compound, and performing a secondary transesterification reaction with addition of an aromatic dicarboxylate after the primary esterification reaction, in which a short chain alcohol-type branching agent is added to the primary esterification reaction or to the secondary transesterification reaction. In the method of the present invention, the slow esterification reaction caused by acid is performed first and the aromatic dicarboxylate compound without acidity is added thereto, thereby efficiently controlling a non-reactant or a partial-reactant affecting an acid value of a product during the reaction, so that an acid value can be controlled and hydrolysis resistance can be improved without using an excessive amount of expensive BDO, an reaction of an excessive amount of a chain extender, or using an expensive anti-hydrolysis agent. Further, by minimizing an amount of the branching agent used herein, tear strength can be improved.

## Description

### [Technical Field]

The present invention relates to a method of preparation for a biodegradable aliphatic-aromatic co-polyester resin with improved hydrolysis resistance, and more particularly, to a method of preparation for a biodegradable aliphatic-aromatic co-polyester resin with improved hydrolysis resistance , particularly, less susceptible to moisture in which an aliphatic dicarboxylic acid is allowed to react with an aliphatic dihydroxy compound and then to react with aromatic dicarboxylic ester in stages to effectively control non-reacted acid groups, so that an acid value can be effectively controlled without using an additional anti-hydrolysis agent or using an excessive amount of an aliphatic dihydroxy compound or using an excessive amount of a chain extender.

### [Background Art]

A biodegradable resin is a synthetic resin developed as a new material which is degraded into water and carbon dioxide or water by a microorganism, such as bacteria, algae, and fungi, existent in nature and does not cause environmental contamination.

The biodegradable resin widely used together with cellulose-based polymers and starches is a resin produced from aliphatic polyester such as polylactic acid (PLA), polybutylene succinate (PBS), polyethylene succinate (PES), and polycaprolactone (PCL).

Such an aliphatic polyester resin has a high biodegradability but a low mechanical property. Therefore, in order to complement mechanical strength of the aliphatic polyester resin, there has been developed a method of preparing a biodegradable resin in the form of an aliphatic-aromatic copolymer by adding an aromatic monomer to a process of producing a biodegradable resin.

As a representative biodegradable resin in the form of an aliphatic-aromatic copolymer, poly(butylene adipate-co-terephthalate) (PBAT) is produced by using dimethyl terephthalate as an aromatic monomer and adipic acid and 1,4-butanediol as aliphatic monomers.

As an aliphatic dihydroxy component which is a representative aliphatic monomer included in the biodegradable polyester resin, 1,4-butanediol (BDO) has been used. The 1,4-butanediol is converted into tetrahydrofuran (THF) at a temperature of 200°C or more under an acidic atmosphere. Therefore, in a reaction with an aromatic monomer requiring a high reaction temperature of 200°C or more, an aliphatic dihydroxy compound is used in an excessive amount with respect to the total amount of the aromatic monomer.

As an aromatic dicarboxylate component which is an aromatic monomer, dimethyl terephthalate (DMT) has been typically used. Dimethyl terephthalate can react at a temperature of 200°C or less, and thus a reaction can be easily induced. However, there is a disadvantage in that dimethyl terephthalate is expensive, thereby increasing cost burden.

Further, as an aliphatic dicarboxylic acid component which is an aliphatic monomer, adipic acid (AA) has been typically used. Acid groups in the aliphatic dicarboxylic acid induce an esterification reaction.

Conventionally, in order to prepare a biodegradable aliphatic-aromatic co-polyester resin, 1,4-butanediol (BDO) as an aliphatic dihydroxy compound is allowed to react with dimethyl terephthalate (DMT) as an aromatic dicarboxylate compound and then to react with adipic acid (AA) as an aliphatic dicarboxylic acid compound or these compounds are allowed to react with one another at the same time under presence of a catalyst.

However, such a method has a problem in that an esterification reaction caused by acid is a relatively slow reaction, and thus it takes a long time to reach 100% esterification after a conversion rate of 90% and non-reacted acid groups remaining after a long-time reaction increase an acid value. The remaining acid groups accelerate thermal decomposition during a polycondensation reaction, and also when the remaining acid groups reach a high molecular weight, they stay at a relatively high temperature for a long time, and thus an acid value is increased.

Therefore, if aging is weakened by a high acid value, there is a problem with hydrolysis resistance, and further, if a mixture with other polyesters sensitive to a hydrolysis reaction such as polylactic acid (PLA), polyhydroxy alkanoate (PHA), polybutylene succinate (PBS), and starch is used, there are problems with processability and strength.

Conventionally, an expensive anti-hydrolysis agent may be used separately, an excessive amount of 1,4-butanediol may be used during a reaction, or an excessive amount of a chain extender may be used to minimize a residence time for a polycondensation reaction and to reach a high molecular weight. However, such a conventional method may cause an increase in productivity and production costs.

In this regard, while studying a method of controlling an acid value of a product to improve hydrolysis resistance during preparation for a biodegradable co-polyester resin, the present inventors have found that if a slow esterification reaction caused by acid is effectively carried out by using an alcohol-type branching agent and also a slow esterification reaction caused by acid is carried out first and then an aromatic dicarboxylate compound without acidity is added to reduce an amount of a non-reactant, an acid value is lowered and hydrolysis resistance of a biodegradable aliphatic-aromatic co-polyester resin can be improved. Thus, the present inventor completed the present invention.

### [Disclosure]

### [Technical Problem]

The present invention is directed to providing a method of preparation for a biodegradable co-polyester resin with improved hydrolysis resistance.

### [Technical Solution]

According to an aspect of the present invention, there is provided a method of preparation for a biodegradable co-polyester resin with improved hydrolysis resistance, including: performing a primary esterification reaction between an aliphatic dihydroxy compound and an aliphatic dicarboxylic acid compound; and performing a secondary transesterification reaction with addition of an aromatic dicarboxylate compound after the primary esterification reaction, in which a short chain alcohol-type branching agent is added to the primary esterification reaction or to the secondary transesterification reaction.

In the method of preparation for the biodegradable aliphatic-aromatic co-polyester resin according to the present invention, preferably, the short chain alcohol-type branching agent may be used in an amount of from 0.01% by weight to 0.7% by weight with respect to a weight of the aliphatic dicarboxylic acid compound.

Further, preferably, the short chain alcohol-type branching agent may be single chain alcohol having three or more functional groups with three to six carbon atoms.

Preferably, the aliphatic dihydroxy compound may be selected from the group consisting of 1,2-ethanediol, 1,3-propanediol, 1,2-butanediol, 1,6-hexanediol, 1,4-hexanediol, 1,4-butanediol, 1,4-cyclohexanediol, 1,4-cyclohexanedimethylandiol, neopentyl glycol, and combinations thereof.

Preferably, the aliphatic dicarboxylic acid compound may be a compound represented by the following Chemical Formula 1, or an anhydride or derivative thereof:

[Chemical Formula 1] HOOC-(CH₂)ₙ-COOH

(where n is 2 to 12.)

Further, preferably, the aromatic dicarboxylate compound may be selected from the group consisting of dimethyl terephthalate, dimethyl isophthalate, dimethyl naphthalate, diethyl terephthalate, diethyl isophthalate, and diethyl naphthalate.

Furthermore, the primary esterification reaction is performed in the same temperature range as the secondary transesterification reaction. To be specific, preferably, the primary esterification reaction may be performed first at a temperature ranging from 160°C to 220°C and the secondary transesterification reaction may be subsequently performed at a temperature ranging from 160°C to 220°C.

In this case, it is preferable to control an acid value of an oligomer obtained after the esterification reactions to be 7.0 mg KOH/gr or less.

Moreover, preferably, the method of preparation for the biodegradable aliphatic-aromatic co-polyester resin according to the present invention may further include performing a polycondensation reaction of an aliphatic-aromatic co-polyester obtained from the secondary transesterification reaction at a temperature ranging from 220°C to 260°C at a vacuum level of less than 2 torr for 40 minutes to 300 minutes.

Besides, preferably, the method of preparation for the biodegradable aliphatic-aromatic co-polyester resin according to the present invention may further include adding and allowing a chain extender to react after the polycondensation reaction.

### [Advantageous Effects]

The present invention has the following effects.

Firstly, in the method of preparation for the biodegradable aliphatic-aromatic co-polyester resin according to the present invention, a slow esterification reaction caused by acid is performed first and then an aromatic dicarboxylate compound without acidity is added thereto, thereby efficiently controlling a non-reactant or a partial-reactant affecting an acid value of a product during the reaction, so that an acid value of the biodegradable co-polyester resin can be controlled to be less than 2.0 mg KOH/gr. Thus, hydrolysis resistance to water can be improved with a small amount of expensive BDO and without an expensive anti-hydrolysis agent.

Secondly, in the method of preparation for the biodegradable co-polyester resin according to the present invention, a short chain alcohol-type branching agent is added to a slow esterification reaction, thereby accelerating the esterification reaction of an acid group and producing co-polyester having a high molecular weight and a branching structure. Thus, particularly, tear strength can be improved.

### [Best Mode]

The present invention relates to a method of preparation for a biodegradable co-polyester resin with improved hydrolysis resistance, the method including: performing a primary esterification reaction between an aliphatic dihydroxy compound and an aliphatic dicarboxylic acid compound; and subsequently performing a secondary transesterification reaction with addition of an aromatic dicarboxylate compound in the process of the biodegradable co-polyester resin, in which a short chain alcohol-type branching agent is added to the primary esterification reaction or to the secondary transesterification reaction.

The co-polyester is an aliphatic-aromatic polyester obtained from the reaction with addition of the aromatic dicarboxylate compound after the reaction between the aliphatic dihydroxy compound and the aliphatic dicarboxylic acid compound.

1,4-butanediol (BDO) used as an example of the aliphatic dihydroxy compound in the present invention is converted into tetrahydrofuran (THF) at a temperature of 200°C or more under an acidic atmosphere. Therefore, if a reaction temperature exceeds 200°C, the 1,4-butanediol (BDO) needs to be used in an excessive amount. Further, the 1,4-butanediol (BDO) needs to be used in an excessive amount in order to control non-reacted acid.

In the present invention, in order to prevent consumption of the aliphatic dihydroxy compound, the aliphatic dihydroxy compound may be allowed to react first by addition of the short chain alcohol-type branching agent that may be added to an esterification reaction from the acid group of the aliphatic dicarboxylic acid compound which can react at a relatively low temperature.

Further, in the present invention, after a reaction and incorporation of the aliphatic dihydroxy compound with the aliphatic dicarboxylic acid compound, the aromatic dicarboxylate compound without acidity may be allowed to react, thereby effectively controlling a non-reactant which may affect an acid value.

To be more specific, the present invention includes: performing a primary esterification reaction between an aliphatic dihydroxy compound and an aliphatic dicarboxylic acid compound; and performing a secondary transesterification reaction with addition of an aromatic dicarboxylate compound after the primary esterification reaction.

In the present invention, a short chain alcohol-type branching agent may be added to the primary esterification reaction or to the secondary transesterification reaction.

Any aliphatic dihydroxy compound can be used as the aliphatic dihydroxy compound of the present invention without limitation if it can be used as a starting material in a process of preparation for a biodegradable aliphatic-aromatic polyester resin. To be specific, it is preferable to use diol having 2 to 6 carbon atoms, such as 1,2-ethanediol, 1,3-propanediol, 1,2-butanediol, 1,6-hexanediol, 1,4-hexanediol, 1,4-butanediol, 1,4-cyclohexanediol, 1,4-cyclohexanedimethylandiol, neopentyl glycol, or combinations thereof. Particularly, it is preferable to use 1,4-butanediol.

Any aliphatic dicarboxylic acid compound may be used without limitation as the aliphatic dicarboxylic acid compound which reacts with the aliphatic dihydroxy compound if it can make a low-temperature esterification reaction caused by acid to form an oligomer.

According to an example of the present invention, the aliphatic dicarboxylic acid compound may be a compound represented by the following Chemical Formula 1, or an anhydride or derivative thereof:

[Chemical Formula 1] HOOC-(CH₂)ₙ-COOH

(where n is 2 to 12, and preferably, n is 2 to 8.)

By way of specific example, succinic acid (SA), glutaric acid (GA), adipic acid (AA), sebacic acid or anhydrides or derivatives thereof may be used as the aliphatic dicarboxylic acid compound.

Two carboxylic acids contained in the aliphatic dicarboxylic acid compound make an esterification reaction with hydroxyl groups contained in the aliphatic dihydroxy compound and also make an esterification reaction with hydroxyl groups of the short chain alcohol-type branching agent. In this case, by adjusting an equivalent weight of the aliphatic dicarboxylic acid compound with respect to the aliphatic dihydroxy compound, one aliphatic dicarboxylic acid compound can be bonded with one aliphatic dihydroxy compound or two aliphatic dihydroxy compounds.

The reaction between the aliphatic dihydroxy compound and the aliphatic dicarboxylic acid compound is ended at the time when the amount of water produced from the esterification reaction reaches a theoretically calculated amount (that is, the amount of water corresponding to the total mol number of carboxylic acid contained in the aliphatic dicarboxylic acid compound).

The short chain alcohol-type branching agent used in the esterification reaction between the aliphatic dihydroxy compound and the aliphatic dicarboxylic acid compound may be preferably multivalent alcohol having three or more functional groups, especially, single chain alcohol with three to six carbon atoms. The alcohol-type branching agent may include, but may not be limited to, glycerol, glycidol, trimethylolpropane (TMP), pentaerythritol, and trimethylolethane (TME).

The alcohol-type branching agent may be used in an amount of from 0.01% by weight to 0.7% by weight with respect to a weight of the aliphatic dicarboxylic acid compound. Such an alcohol-type branching agent is added to an esterification reaction of acid group to efficiently perform the reaction and form a branching structure with a required molecular weight, thereby remarkably improving, particularly, tear strength of a finally produced co-polyester resin.

After the primary esterification between the aliphatic dihydroxy compound and the aliphatic dicarboxylic acid compound is completed, the secondary transesterification reaction with the aromatic dicarboxylate compound is subsequently performed.

In the present invention, the aromatic dicarboxylate compound may be an aromatic monomer which is used to improve a mechanical property of a biodegradable resin comprised of a single aliphatic polyester polymer and preferably, does not include acidity. By way of example, the aromatic dicarboxylate compound may be selected from the group consisting of dimethyl terephthalate, dimethyl isophthalate, dimethyl naphthalate, diethyl terephthalate, diethyl isophthalate, and diethyl naphthalate.

The amount of the aliphatic dihydroxy compound may be used in the range required for a target esterification reaction. The aliphatic dihydroxy compound of 1.0 mol or more may be added to 1mol of the aliphatic dicarboxylic acid compound and the aromatic dicarboxylate compound, and preferably, the aliphatic dihydroxy compound of 1.3 mol or more may be added. It is preferable to use the aliphatic dicarboxylic acid compound and the aromatic dicarboxylate compound at a molar ratio of 0.55 to 0.5: 0.45 to 0.5, and more preferably, at a molar ratio of 0.52:0.48 in terms of biodegradability. If biodegradability is not required, the aliphatic dicarboxylic acid compound and the aromatic dicarboxylate compound may react with each other at various molar ratios.

The primary and secondary reactions may be performed batch-wise or continuously under normal pressure. Preferably, the primary reaction may be performed at a temperature ranging from 160°C to 220°C and the secondary reaction may be performed at a temperature ranging from 160°C to 220°C similar to the temperature of the primary reaction.

In this case, an acid value of an oligomer obtained after the esterification reactions is controlled to be 7.0 mg KOH/gr or less. If an acid value of the oligomer is 7.0 mg KOH/gr or more, thermal decomposition is accelerated during a polycondensation reaction and an acid value and color index are increased, so that the oligomer cannot only reach a required molecular weight but also have the vulnerable properties of hydrolysis resistance.

In the present invention, after an aliphatic-aromatic co-polyester is obtained through the secondary esterification reaction, the polycondensation reaction or a chain extending reaction is performed to increase a molecular weight. Thus, a biodegradable resin having a required property can be obtained.

In the present invention, preferably, the polycondensation reaction may be performed to the aliphatic-aromatic co-polyester obtained through the secondary reaction at a vacuum level of less than 2 torr at a temperature ranging from 220°C to 260°C for 40 minutes to 300 minutes.

The polycondensation reaction is used to induce a reaction between polymers that the oligomer produced through the secondary reaction or do not get a preferable molecular weight. In order to do so, the polycondensation reaction needs to be performed with a functional group that does not react but remains at end of the polymer or at chain of the polymer. Therefore, the polycondensation reaction is performed in a vacuum at a high temperature. A reaction time of the polycondensation reaction can be adjusted depending on an amount of a catalyst and a method of adding the catalyst to be described later.

Further, in the present invention, there may be performed a chain extending reaction in which a chain extender is added to connect two or more polycondensated aliphatic-aromatic co-polyesters obtained through polycondensation reaction. The chain extender may include a multivalent isocyanate compound, a peroxide compound, an epoxy compound, and a di-, oligomer- or polymer-functional oxazoline, oxazine, caprolactam or carbodiimide. Preferably, the chain extender may be used in an amount of 0.05 parts by weight to 2 parts by weight with respect to the co-polyester.

The multivalent isocyanate compound may include one or more selected from the group consisting of 2,4-toluene diisocyanate, 2,6-toluene diisocyanate, diphenylmethane diisocyanate, xylylene diisocyanate, 1,5-naphtylene diisocyanate, hexamethylene diisocyanate, and triphenylmethane triisocyanate, and preferably may include hexamethylene diisocyanate.

Further, in the present invention, a catalyst, a thermal stabilizer, or an inhibitor may be used to improve efficiency of the above-described reactions by accelerating and stabilizing the reactions.

As the catalyst, calcium acetate, manganese acetate, magnesium acetate, zinc acetate, monobutyltin oxide, dibutyltin oxide, monobutyl hydroxy tin oxide, octyltin, dibutyltin dichloride, tetraphenyltin, tetrabutyltin, tetrabutyl titanate, tetramethyl titanate, tetraisopropyl titanate, and tetra(2-ethylhexyl)titanate may be used. Preferably, tetrabutyl titanate (Ti(OC₄H₉)₄) or an organic titanium catalyst such as Vertec®VEXP 0641 (titanium type catalyst, Johnson Matthey) may be used. Preferably, the amount of the catalyst used may be 0.1 g to 1.5 g with respect to 1 mol of the aliphatic dicarboxylic acid compound and an aromatic dicarboxylic acid compound.

As the thermal stabilizer, an organic phosphorous compound such as triphenyl phosphate or trimethyl phosphate may be further added to react. The phosphorous compound stabilizes a reaction by preventing thermal decomposition while a molecular weight is increased at a high temperature.

The inhibitor may be used in an amount ranging from 0.001% by weight to 0.1% by weight with respect to the amount of the catalyst in order to prevent depolymerization caused by an excessive amount of the catalyst during a polycondensation reaction. Further, if a titanium catalyst is used, the inhibitor may be used such that a ratio of Ti/P becomes 1.3 to 1.5 : 1. As the inhibitor used herein, an organic phosphorous compound such as phosphoric acid or phosphorous acid may be used.

Hereinafter, examples will be provided to explain the present invention in detail. However, it is clear that the examples are provided for easy understanding of the present invention but do not limit the present invention.

### Example 1

1.3 mol of 1,4-butanediol (BDO), 0.52 mol of adipic acid (AA), 0.3 g of tetrabutyl titanate, 0.1 g of triphenyl phosphate, and glycerol as a branching agent in an amount of 0.65% by weight with respect to the weight of the adipic acid were mixed in a 500 ml 3-neck reactor, and then the reactor was increased in temperature. A primary esterification reaction was performed at 200°C. The primary esterification reaction was performed for 90 minutes.

Then, 0.48 mol of dimethyl terephthalate (DMT) was added into the reactor, and a secondary reaction was performed at the same temperature. The reaction was ended at the time when a temperature at an upper part of a condenser of the reactor was decreased to 90°C or less. The secondary transesterification reaction was performed for 90 minutes.

Thereafter, a polycondensation reaction was performed to a reactant obtained from the secondary reaction at a temperature of 240°C and a vacuum level of less than 1 torr for 135 minutes. As a result, a biodegradable resin was obtained.

### Example 2

A biodegradable resin was obtained by performing reactions in the same manner as Example 1, except that glycidol was used as the branching agent instead of glycerol.

### Example 3

A biodegradable resin was obtained by performing reactions in the same manner as Example 1, except that the amount of the branching agent was 0.39% by weight with respect to the weight of the adipic acid.

### Comparative Example 1

A biodegradable resin was obtained by performing reactions in the same manner as Example 1, except that malic acid was used as the branching agent.

### Comparative Example 2

1.3 mol of 1,4-butanediol (BDO), 0.48 mol of dimethyl terephthalate, 0.3 g of tetrabutyl titanate, 0.1 g of triphenyl phosphate, and glycerol in an amount of 0.65% by weight with respect to a weight of adipic acid were mixed in a 500 ml 3-neck reactor, and then the reactor was increased in temperature. A primary transesterification reaction was performed at 200°C. The primary esterification reaction was performed for 90 minutes.

Then, 0.52 mol of adipic acid was added into the reactor and a secondary reaction was performed at the same temperature. The reaction was ended at the time when a temperature at an upper part of a condenser of the reactor was decreased to 90°C or less. The secondary esterification reaction was performed for 90 minutes.

Thereafter, a polycondensation reaction was performed to a product obtained from the primary and secondary reactions at a temperature of 240°C and a vacuum level of less than 1 torr for 135 minutes. As a result, a biodegradable resin was obtained.

### Comparative Example 3

A biodegradable resin was obtained by performing reactions in the same manner as Comparative Example 2, except that malic acid was used as the branching agent.

**[Table 1]**

| | Reaction system | Branching agent | Amount of branching agent |
|---|---|---|---|
| | | | % by Weight to AA |
| Example 1 | AA→DMT | Glycerol | 0.65 |
| Example 2 | AA→DMT | Glycidol | 0.65 |
| Example 3 | AA→DMT | Glycerol | 0.39 |
| Comparative Example 1 | AA→DMT | Malic acid | 0.65 |
| Comparative Example 2 | DMT→AA | Glycerol | 0.65 |
| Comparative Example3 | DMT→AA | Malic acid | 0.65 |

### Experimental Example 1

Acid values, molecular weights, hydrolysis resistances, and tear strengths of the biodegradable resins obtained from Examples 1 to 3 and Comparative Examples 1 to 3 were measured. Results thereof are shown in Table 2.

**Acid value of product:** Measurement was carried out by performing titration with 0.1 N KOH in an autotitrator.

**Weight-average molecular weight (Mw):** After a chloroform solution in an amount of 0.1% by weight with respect to an amount of a resin was prepared, a weight-average molecular weight (Mw) was measured at a flow velocity of 1 ml/min at 35°C using GPC (Gel Permeation Chromatography) (Agilent 1200 Infinity Series).

**Hydrolysis property:** After a resin chip was heated in boiling water of 100°C for 3 hours, a change in weight-average molecular weight reduction rate was measured.

Tear **strength:** After a resin film having a thickness of 30 µm was obtained at a temperature of 190°C by using a film blowing extruder, tear strength (kgf/cm) was measured by using an Elmendorf-type tester.

**[Table 2]**

| Division | Product | | | |
|---|---|---|---|---|
| | Acid value (mg KOH/gr) | | Hydrolysis property | Tear strength of MD |
| | After ES | After PC | Molecular weight reduction rate | Kgf/cm |
| Example 1 | 3.0 | 1.50 | 13% | 230 |
| Example 2 | 4.2 | 1.60 | 15% | 245 |
| Example 3 | 3.8 | 2.10 | 15% | 283 |
| Comparative Example 1 | 7.0 | 2.95 | 20% | 220 |
| Comparative Example 2 | 15.0 | 4.60 | 25% | 221 |
| Comparative Example 3 | 21.0 | 5.50 | 30% | 224 |

As can be seen from Table 2, it is confirmed that the biodegradable aliphatic-aromatic co-polyester resins in Examples 1 to 3 according to the present invention have acid values of 4.2 mg KOH/gr or less after an esterification reaction (ES) and acid values of 2.1 mg KOH/gr or less after a polycondensation reaction (PC). Further, it can be seen that molecular weight reduction rates in Examples 1 to 3 were much lower than those in Comparative Examples. In Examples 1 to 3 using the alcohol-type branching agent having three or more functional groups, if the amount of the alcohol-type branching agent was reduced, that is, particularly in case of Example 3, it can be seen that tear strength was remarkably improved.

## Claims

1. A method of preparation for a biodegradable aliphatic-aromatic co-polyester resin with improved hydrolysis resistance, the method comprising:
performing a primary esterification reaction between an aliphatic dihydroxy compound and an aliphatic dicarboxylic acid compound; and
performing a secondary transesterification reaction with addition of an aromatic dicarboxylate after the primary esterification reaction,
wherein a short chain alcohol-type branching agent is added to the primary esterification reaction or to the secondary transesterification reaction.

2. The method of claim 1, wherein the short chain alcohol-type branching agent is used in an amount of from 0.01% by weight to 0.7% by weight with respect to a weight of the aliphatic dicarboxylic acid compound.

3. The method of claim 1, wherein the short chain alcohol-type branching agent is single chain alcohol having three or more functional groups with three to six carbon atoms.

4. The method of claim 1, wherein acid values after the primary esterification reaction and the secondary transesterification reaction are 7.0 mg KOH/gr or less.

5. The method of claim 1, wherein the aliphatic dihydroxy compound is selected from the group consisting of 1,2-ethanediol, 1,3-propanediol, 1,2-butanediol, 1,6-hexanediol, 1,4-hexanediol, 1,4-butanediol, 1,4-cyclohexanediol, 1,4-cyclohexanedimethylandiol, neopentyl glycol, and combinations thereof.

6. The method of claim 1, wherein the aliphatic dicarboxylic acid compound is a compound represented by the following Chemical Formula 1, or an anhydride or derivative thereof:
[Chemical Formula 1] HOOC-(CH₂)ₙ-COOH
(where n is 2 to 12.)

7. The method of claim 1, wherein the aromatic dicarboxylate compound is selected from the group consisting of dimethyl terephthalate, dimethyl isophthalate, dimethyl naphthalate, diethyl terephthalate, diethyl isophthalate, and diethyl naphthalate.

8. The method of claim 1, wherein the primary esterification reaction is performed first at a temperature ranging from 160°C to 220°C and the secondary transesterification reaction is subsequently performed at a temperature ranging from 160°C to 220°C.

9. The method of claim 1, further comprising performing a polycondensation reaction of an aliphatic-aromatic co-polyester obtained from the secondary transesterification reaction at a temperature ranging from 220°C to 260°C and a vacuum level of less than 2 torr for 40 minutes to 300 minutes.

10. The method of claim 9, further comprising adding and allowing a chain extender to react after the polycondensation reaction.
